# EUROPEAN PATENT APPLICATION

(11) **EP 2 578 923 A1**
(43) Date of publication of application: **10.04.2013**
(21) Application number: 11789425.3
(22) Date of filing: 27.05.2011
(51) Int. Cl.: F21S 2/00, F21V 5/00, F21V 5/04, F21V 17/10, F21V 17/16, F21Y 101/02

(54) **LIGHT SOURCE DEVICE**

(30) Priority: 01.06.2010 JP 2010125736
(71) Applicant: Panasonic Corporation, Kadoma-shi Osaka 571-8501 (JP)
(72) Inventor: HASHIMOTO, Naotaka, Osaka-shi, Osaka 540-6207 (JP); KAWAGOE, Shinya, Osaka-shi, Osaka 540-6207 (JP); KIRYU, Hideaki, Osaka-shi, Osaka 540-6207 (JP); ENDO, Toshikazu, Osaka-shi, Osaka 540-6207 (JP); TAKEZAWA, Kuninori, Osaka-shi, Osaka 540-6207 (JP); KAMEYAMA, Hayato, Osaka-shi, Osaka 540-6207 (JP)
(74) Representative: Eisenführ, Speiser & Partner
(86) International application number: PCT/JP2011/002977
(87) International publication number: WO 2011/152011

(57) **Abstract**

A light source apparatus that can be assembled and disassembled easily. A light source apparatus 100 includes: a body 120 housing a light-emitting module 110; and a front cover 130 attached to an opening portion 121 of the body 120 and including a light emission window 131 for allowing light emitted from the light-emitting module 110 to go outside. The opening portion 121 is provided on a front side of the body 120. The front cover 130 includes a plurality of engaging claws 134a through 134f and is attached to the body 120 when the engaging claws 134a through 134f engage with a claw receiving portion 124 provided in an outer surface of the body 120.

## Description

### [Technical Field]

The present invention relates to a light source apparatus in which a light-emitting module such as an LED (Light-Emitting Diode) module is used as the light source.

### [Background Art]

In recent years, triggered by the practical use of super luminosity LEDs, there have been attempts to use, as the substitute for halogen bulbs or incandescent bulbs, light source apparatuses having LEDs as the light source. As one of such light source apparatuses, for example, Patent Literature 1 discloses a light source apparatus 900 having a structure shown in FIG. 14, in which a light-emitting module 901 is housed in a body 902, and to an opening portion 903 provided in the front face of the body 902, a front cover 905 made of resin and having a plurality of engaging claws 904 is attached by causing the engaging claws 904 to engage with claw receiving portions 906 provided on the inner circumferential surface of the body 902.

With such a structure, it is possible to attach the front cover 905 to the body 902 by pressing and fitting the front cover 905 to the opening portion 903. With this structure, the light source apparatus can be assembled more easily than the method of attaching a metal front cover to the body by swaging, or fixing a front cover made of a metal or resin to the body by using screws or screwing them while the grooves thereof mesh with each other. When a front cover made of a metal or resin is attached to the body by bonding, there is a possibility that the bond runs out and a disfigurement is caused. However, with this structure, there is no such possibility. Thus the light source apparatus can be assembled more easily with the present structure than with the structure in which the bond is used.

### [Citation List]

### [Patent Literature]

[Patent Literature 1]
   Japanese Patent Application Publication No. 2009-093926

### [Summary of Invention]

### [Technical Problem]

However, with the above structure of the light source apparatus 900, although it is easy to attach the front cover 905, once the front cover 905 is attached, the engaging claws 904 of the front cover 905 hide behind the body 902, and it becomes difficult to remove the front cover 905 when the light source apparatus 900 is disassembled for recycling, for example.

It is therefore an object of the present invention to provide a light source apparatus that can be assembled and disassembled easily.

### [Solution to Problem]

The above object is fulfilled by a light source apparatus comprising: a body having an opening portion on a front side thereof, and housing a light-emitting module; and a front cover attached to the opening portion of the body and including a light emission window for allowing light emitted from the light-emitting module to go outside, the front cover having a plurality of engaging claws and being attached to the body when the engaging claws engage with a claw receiving portion that is provided in an outer surface of the body.

### [Advantageous Effects of Invention]

With the above structure of the light source apparatus of the present invention, the attachment of the front cover to the body can be performed simply by causing the engaging claws of the front cover to be in contact with the claw receiving portion provided in an outer surface of the body, and pressing the front cover onto the body. Also, after the front cover is attached to the body, the engaging members are positioned outside the body. Accordingly, the front cover can be removed easily from the body because the engaging claws can be easily removed from the claw receiving portion. On the other hand, since a plurality of engaging claws are provided, this structure prevents the front cover from being removed from the body by a slight shock. Accordingly, the light source apparatus of the present invention is both assembled and disassembled easily, and prevents the front cover from being removed by a slight shock.

### [Brief Description of Drawings]

FIG. 1 is a perspective view of the light source apparatus in Embodiment 1.
FIG. 2 is an exploded perspective view of the light source apparatus in Embodiment 1.
FIG. 3 is an exploded perspective view of the light source apparatus in Embodiment 1.
FIG. 4 is a perspective view of the light-emitting module in Embodiment 1.
FIG. 5 is a perspective view of the front cover in Embodiment 1 looking from the back side.
FIG. 6 is a rear view of the front cover in Embodiment 1.
FIG. 7 is a sectional view illustrating how the light-emitting unit and the lighting unit are connected.
FIG. 8 is a sectional view illustrating how the front cover is attached to the body.
FIG. 9 is an enlarged cross sectional view of a portion indicated by sign "A" in FIG. 8.
FIG. 10 is an exploded perspective view of the light source apparatus in Embodiment 2.
FIGs. 11A and 11B are sectional views illustrating how the front cover is attached to the body. FIG. 11A illustrates the state before the front cover is attached to the body. FIG. 11B illustrates the state after the front cover is attached to the body.
FIG. 12 is an exploded perspective view of the light source apparatus in Embodiment 3.
FIGs. 13A and 13B illustrate the light source apparatus in Embodiment 4. FIG. 13A is a perspective view, and FIG. 13B is a sectional view.

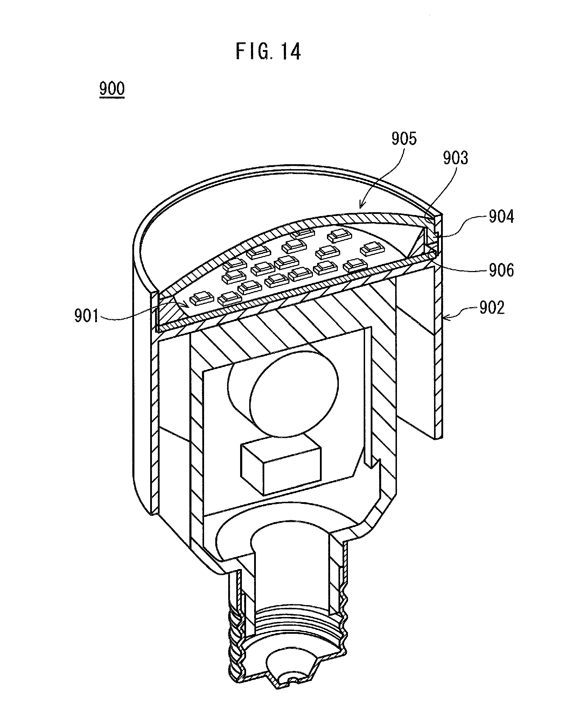

FIG. 14 is a sectional perspective view of a conventional light source apparatus.

### [Description of Embodiments]

The following Embodiments explain examples of the light source apparatus of the present invention with reference to the attached drawings.

### [Embodiment 1]

### (Structure outline)

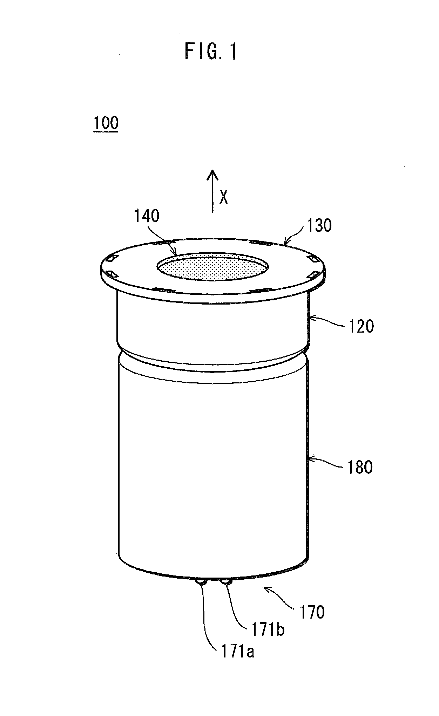

FIG. 1 is a perspective view of the light source apparatus in Embodiment 1. As shown in FIG. 1, a light source apparatus 100 in Embodiment 1 is a spotlight having an outer appearance of an approximate cylinder, and since the light source apparatus 100 is partially common to the halogen bulb defined in the JIS C 7527 standard in shape, it can be used as a substitute for the halogen bulb.

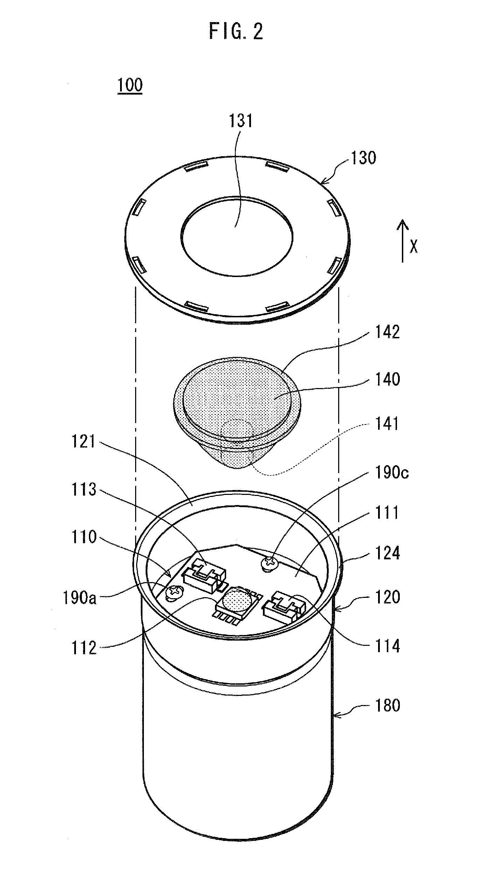

FIG. 2 is an exploded perspective view of the light source apparatus in Embodiment 1. As shown in FIG. 2, the light source apparatus 100 has a structure in which an LED module (light-emitting module) 110 is housed in a body 120, and a front cover 130, which is provided with a light emission window 131 for extracting the light emitted from the LED module 110 to outside, is attached to an opening portion 121 provided on the front side of the body 120, with a lens 140 being fitted in the light emission window 131. Note that in FIG. 2, the direction indicated by arrow X is the front direction, namely a direction in which the light source apparatus 100 emits light. This applies to the other drawings as well.

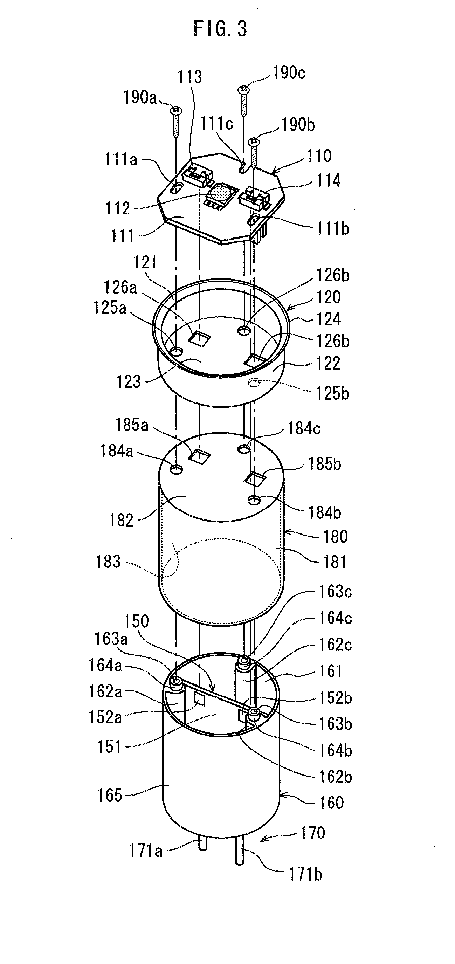

FIG. 3 is an exploded perspective view of the light source apparatus in Embodiment 1, from which the front cover and lens have been removed. As shown in FIG. 3, the light source apparatus 100 includes, as well as the LED module 110, body 120, front cover 130, and lens 140 mentioned above, a lighting unit 150, a case 160, a base 170, a heat sink 180 and the like.

### (LED module)

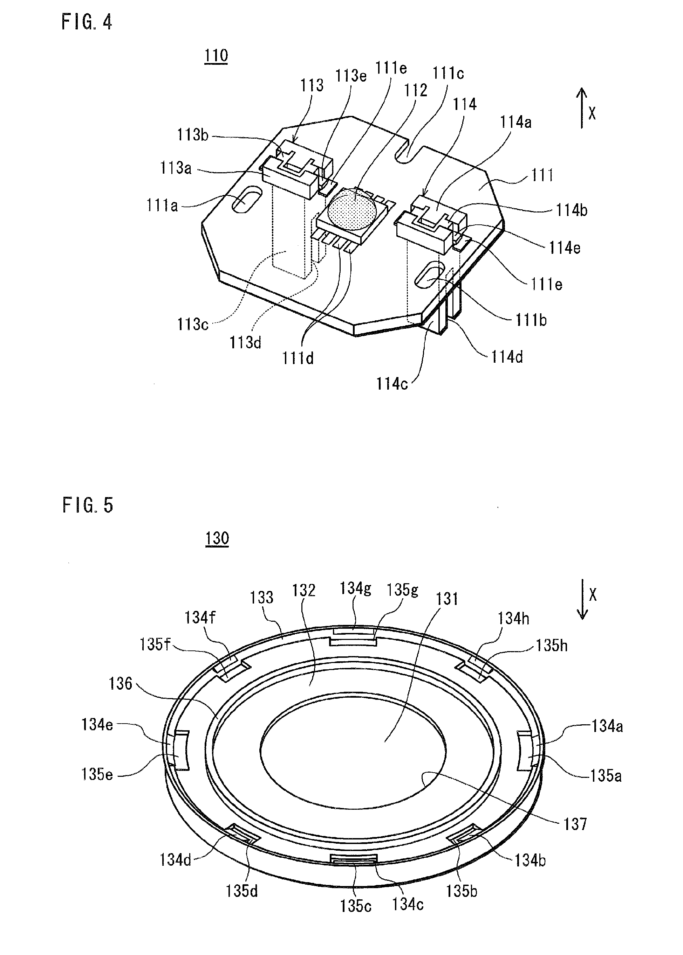

FIG. 4 is a perspective view of the light-emitting module in Embodiment 1. The LED module 110 is the light source of the light source apparatus 100, and includes, as shown in FIG. 4 for example, an implementation substrate 111, an LED (light-emitting element) 112, and a pair of connectors 113 and 114.

The implementation substrate 111 is, for example, in the shape of an approximately octagonal plate and includes: a metal plate made of aluminum or the like on which an insulation layer made of thermally conductive resin is formed; a wiring pattern (not illustrated) formed on the insulation layer to be electrically connected with the LED; and three screw insertion holes 111a through 111c formed at positions not overlapping with the wiring pattern. As the substrate structure, the substrate may include a ceramic plate on which a wiring pattern is formed to be electrically connected with the LED. Note that the screw insertion holes 111a through 111c are elongated holes that broaden in the same direction in width, so that, when the LED module 110 is fixed by the screws, the LED module 110 can be shifted in position along the elongated holes.

The LED 112, for example, includes: an LED chip of the InGaN type with blue emission light; and a semispherical sealing member which contains a phosphor for emitting yellow-green light and seals the LED chip therein. The LED 112 converts a part of blue light emitted from the LED chip to yellow-green by the phosphor, and emits white light that is generated as a mixture of blue light and yellow-green light. The LED 112 is implemented on the implementation substrate 111, and is electrically connected with lands 111d of the wiring pattern of the implementation substrate 111.

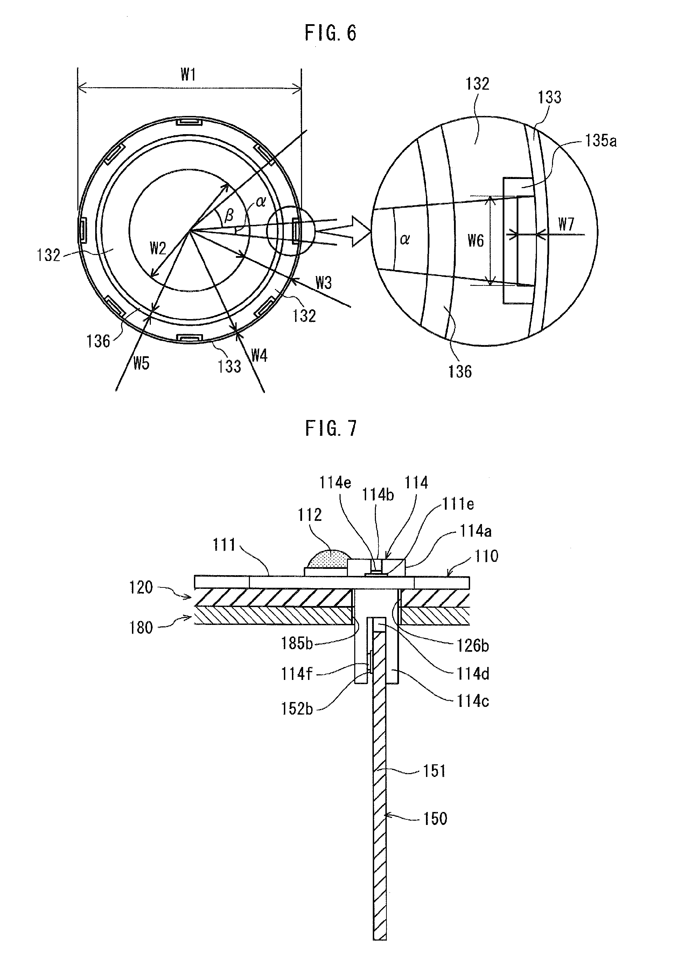

The connectors 113 and 114 have insulation members 113a and 114a, which are each in the shape of an approximate rectangular cylinder, and electrically conductive members 113b and 114b attached to the insulation members 113a and 114a, respectively. The connectors 113 and 114 are fixed to the implementation substrate 111 in the state where they have passed through the implementation substrate 111. Back-side ends 113c and 114c of the insulation members 113a and 114a are provided with slits 113d and 114d to be engaged with the lighting unit 150, respectively. Front-side ends 113e and 114e of the electrically conductive members 113b and 114b are provided with lands 111e of the wiring pattern of the implementation substrate 111. Back-side end 114f of the electrically conductive members 113b and 114b (see FIG. 7, wherein the back-side end of the electrically conductive member 113b is not illustrated) is positioned in the slits 113d and 114d of the insulation members 113a and 114a.

### (Body)

Back to FIG. 3, the body 120 is, for example, a cylindrical member with a bottom, is made of a material that has excellent heat radiation, such as a metal or ceramic (including glass), and includes a cylindrical portion 122 and a bottom 123 which is in the shape of a circular plate and closes the lower end of the cylindrical portion 122.

The front-side end of the cylindrical portion 122 increases in outer and inner diameters as it proceeds toward the front direction, and the part with the increased diameters constitutes the opening portion 121 of the body 120. The opening portion 121 is provided with a flange (claw receiving portion) 124 that extends outward from an outer circumferential edge of the opening portion 121. The front cover 130 is attached to the body 120 by using the flange 124. Note that the assembly structure of the front cover 130 will be described in detail later. In the bottom 123, three approximately circular screw insertion holes 125a through 125c and two approximately rectangular connector insertion holes 126a and 126b are formed.

### (Front cover)

FIG. 5 is a perspective view of the front cover in Embodiment 1 looking from the back side. The front cover 130 is made of a non-light-transmissive material such as white PBT (polybutylene terephthalate), and as shown in FIG. 5, includes: a main body 132 that is in the shape of a ring-like plate and has an approximately circular light emission window 131; and a circumferential wall 133 that is in the shape of a short cylinder extending backward from the outer circumferential edge of the main body 132.

Note that the resin that constitutes the cover 130 is not limited to PBT, but may be acrylic, PC (polycarbonate) or the like. PBT is preferred as a material of the front cover 130 since it has high heat resistance, moderate elasticity, and high weather resistance. Also, the front cover 130 is not limited to white. The front cover 130 made of resin can be colored at a low cost.

The front cover 130 is provided with eight engaging claws 134a through 134h along the outer circumferential edge of the front cover 130 at intervals. More specifically, the engaging claws 134a through 134h are provided in the inner circumferential surface of the circumferential wall 133 near the back-side end thereof, along the circumferential direction of the inner circumferential surface, so as to project toward the cylinder axis of the circumferential wall 133. The front cover 130 is attached to the body 120 by using the engaging claws 134a through 134h.

The engaging claws 134a through 134h are arranged at intervals in the front cover 130. Accordingly, each of the engaging claws 134a through 134h engages independently with the flange 124 of the body 120. With such a structure, even if one of the engaging claws 134a through 134h is removed from the flange 124, it does not have an effect to such an extent that any of the other engaging claws 134a through 134h is removed as well, and thus the structure prevents the front cover 130 from being removed from the body 120 by a slight shock. Furthermore, the structure enables the stress, which is applied to the engaging claws 134a through 134h when the front cover 130 is attached or detached, to be distributed over the engaging claws 134a through 134h. Thus with this structure, attachment/detachment can be performed smoothly, and the engaging claws 134a through 134h are difficult to break.

On the other hand, for example, when an engaging claw is formed like a ring to be continuous along the outer circumferential edge of the front cover, if one portion of the continuous engaging claw is removed from the flange 124, the entire engaging claw connected with the portion might be removed from the flange 124. Thus with this structure, the cover 130 may be easily removed from the body 120. Also, when the front cover 130 is attached or detached, the stress applied to the engaging claws is apt to be concentrated on one portion of the engaging claws. Thus with this structure, attachment/detachment requires a large force, and the engaging claws are easy to break.

Note that the number of the engaging claws 134a through 134h is not limited to eight, but it is preferable that the number of the engaging claws 134a through 134h is in a range from "3" to "30", taking into account that the front cover 130 needs to be attached easily, detached with difficulty by a slight shock, and detached relatively easily when the light source apparatus 100 is disassembled.

The main body 132 of the front cover 130 is provided with holes 135a through 135h at positions corresponding to the engaging claws 134a through 134h, respectively. With the presence of the holes 135a through 135h, it is possible to form, from resin by molding, the front cover 130 of a complicated shape by using a simple mold constituted from a smaller number of parts. This realizes a simple molding. Also, on the back face of the main body 132, a rib 136 in the shape of an approximate ring is provided. This reinforces the strength of the front cover 130.

FIG. 6 is a rear view of the front cover in Embodiment 1. It is preferable that diameter W1 of the front cover 130 shown in FIG. 6 is in a range from 34.3 mm to 71.0 mm so as to be in compliance with the JIS C 7527 standard. In the present embodiment, the diameter W1 is set to 50 mm. In this case, diameter W2 of the light emission window 131 is in a range from 15 mm to 35 mm so that, among the light emitted from the LED module 110, a sufficient amount of light is extracted to outside the body 120. It is preferable that width W3 of the main body 132 is in a range from 7.5 mm to 17.5 mm so that the front cover 130 holding the lens 140 has a sufficient level of strength. It is preferable that width W4 of the circumferential wall 133 is in a range from 0.3 mm to 1.0 mm so that each of the engaging claws 134a through 134h has moderate elasticity relative to the flange 124. It is preferable that width W5 of the rib 136 is in a range from 0.4 mm to 1.5 mm so that the main body 132 has a sufficient level of strength.

Also, in the present embodiment, tips 139 of the engaging claws 134a through 134h (portions of the engaging claws 134a through 134h engaging with the flange 124) that go around behind the flange 124 and engage with the flange 124 have a length in a range from 0.5 mm to 1 mm on the flat face thereof, and the flange, which is seized by the engaging claws 134a through 134h, extends outwardly by a length in a range from 1 mm to 2 mm. It is preferable that width W6 of the engaging claws 134a through 134h in the circumferential direction of the cover is in a range from 2 mm to 8 mm so that the engaging claws 134a through 134h can be attached to and detached from the flange 124 appropriately. For a similar reason, it is preferable that each of the engaging claws 134a through 134h has a width in a range corresponding to a range from 4.5° to 18.5° of central angle α. Furthermore, for a similar reason, it is preferable that each gap between the engaging claws 134a through 134h has a width in a range corresponding to a range from 26.5° to 40.5° of central angle β. Furthermore, for a similar reason, it is preferable that a maximum width W7 of the engaging claws 134a through 134h in a radial direction of the cover is in a range from 0.4 mm to 1.5 mm. It should be noted here that the preferable ranges of these measurements vary depending on the diameter of the cover.

### (Lens)

Back to FIG. 2, the lens 140, for example, is made of a transparent acrylic resin, has the shape of an inverted truncated cone, and has, at the center of the lower end thereof, a concave 141 in the shape of an approximate cylinder in which a part of the LED 112 is fit. By fitting a part of the LED 112 into the concave 141, the movement of the lens 140 is restricted in a direction perpendicular to the front and back direction. The material of the lens 140 is not limited to the transparent acrylic resin, but may be a light transmissive material such as other light transmissive resin or glass.

The lens 140 is an optical member for collecting the light from the LED module 110. The light emitted from the LED 112 is acquired by the lens 140, collected by the lens 140, and released to outside of the body 120. When the lamp is used as a spotlight, it is preferable that an LED whose beam angle is at most 140° is used as the LED 112 to facilitate the collection of light.

### (Lighting unit)

The lighting unit 150, for example, may include a lighting circuit provided with: a rectifier circuit that rectifies an AC power supplied from a commercial power source to a DC power; and a voltage adjustment circuit that adjusts a voltage value of the DC power rectified by the rectifier circuit. The lighting unit 150 causes the LED module 110 to emit light, by using the commercial power source.

As shown in FIG. 3, the lighting unit 150 includes a circuit substrate 151 which is a rectangular plate and on which a plurality of electronic parts (not illustrated) such as a diode, electrolytic capacitor, coil, and resistor are implemented. On the circuit substrate 151, terminals 152a and 152b, which are electrically connected with the connectors 113 and 114 of the LED module 110, are provided.

### (Case)

The case 160, for example, is in the shape of a cylinder with a bottom, wherein the lower end is closed and the upper end is opened, and is made of an insulation material such as resin or ceramic. The case 160 houses the lighting unit 150 inside. On an inner circumferential surface 161 of the case 160, three protrusions 162a through 162c are provided at regular intervals in the circumferential direction. Also, convexes 164a through 164c in the shape of approximate cylinder having screw holes 163a through 163c are formed on the front side of the protrusions 162a through 162c.

### (Base)

The base 170 is composed of base pins conforming to "GU5.3" defined in the JIS C 7709 standard so as to be adaptable to the socket for halogen bulb. The base 170 illustrated in FIG. 1 is composed of a pair of base pins 171a and 171b. The base pins 171a and 171b are provided to project from the bottom face of the case 160 and are electrically connected with the lighting unit 150. Note that the base of the present invention is not limited to pin bases of "GU5.3", but may be pin bases of "GU10" or E bases of "E26" or the like.

### (Heat sink) "the structure as such"

The heat sink 180 includes a cylindrical part 181 and an end wall 182, and is made of a material that has excellent heat radiation, such as a metal or ceramic. The end wall 182 is in the shape of a circular plate and closes the upper end of the cylindrical part 181. Due to the simple shape as such, the heat sink 180 can be manufactured by the drawing process, and can be made thin. This contributes to reduction in weight of the light source apparatus 100. Note that the heat sink 180 may be manufactured by a method, such as diecasting, other than the drawing process.

The cylindrical part 181 fits to the outside of the case 160, and for example, covers, in its entirety, an outer circumferential surface 165 of the case 160. The structure as such covering the outer circumferential surface in its entirety increases the surface area of the cylindrical part 181, improves the heat radiation, and improves the outer appearance of the light source apparatus 100. The above structure having the heat sink 180 is in particular effective in a light source apparatus for spotlight, which tends to have a problem of increase in temperature due to LED because a small, super-luminosity LED is apt to be used.

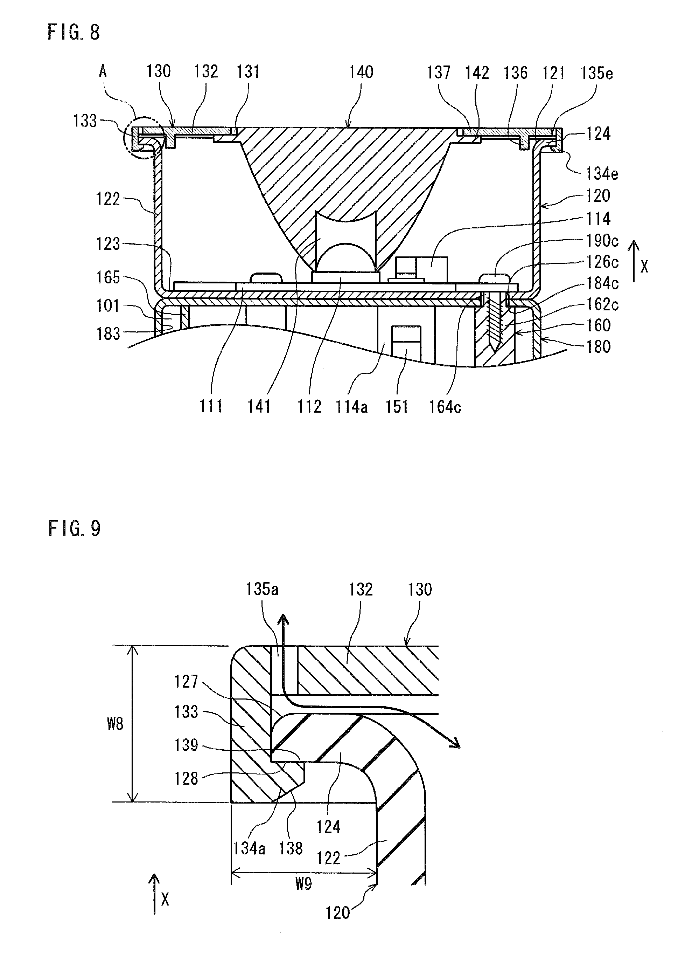

The inner diameter of the heat sink 180 is larger than the outer diameter of the case 160 such that a gap 101 (see FIG. 8) is formed between an inner circumferential surface 183 of the heat sink 180 and an outer circumferential surface 165 of the case 160, the gap 101 being approximately uniform in width all over the inner circumferential surface 183 in the circumferential direction. The gap 101 makes it difficult for the heat to be transferred from the heat sink 180 to the case 160, thus making it difficult for the lighting unit 150 housed in the case 160 to be destroyed by heat. Also, this structure allows the inner circumferential surface 183 of the heat sink 180 and the outer circumferential surface 165 of the case 160 to be exposed to the air, thus further improving the heat radiation of the heat sink 180.

The end wall 182 is provided between the body 120 and the case 160, closing the opening of the case 160. In the end wall 182, three screw insertion holes 184a through 184c, which are approximately in the same shape as the screw insertion holes 125a through 125c of the body 120, and two connector insertion holes 185a and 185b, which are approximately in the same shape as the connector insertion holes 126a and 126b of the body 120, are formed.

Since, in the light source apparatus 100, the heat sink 180 is provided as a separate body from the body 120 and the case 160, the heat sink 180 can be changed in shape and size appropriately based on the level of wattage, while allowing the body 120 and the case 160 to be used in common in a plurality of types of light source apparatuses that have different levels of wattage. This reduces the cost because some structural elements can be used in common, and also facilitates development of various types of light source apparatuses.

### (Assembly structure)

The light source apparatus 100 in Embodiment 1 described above is assembled as follows.

First, as shown in FIG. 3, the heat sink 180 is fit to the outside of the case 160 from the front side in the state where the lighting unit 150 is housed in the case 160, and then the convexes 164a through 164c of the case 160 are passed through the screw insertion holes 184a through 184c of the heat sink 180. Furthermore, the body 120 is mounted on the end wall 182 of the heat sink 180, and the convexes 164a through 164c of the case 160 are passed through the screw insertion holes 125a through 125c of the body 120, as well. In this state, the positioning is made relative to the terminals 152a and 152b of the circuit substrate 151 in the state where the connector insertion holes 185a and 185b of the heat sink 180 and the connector insertion holes 126a and 126b of the body 120 communicate with each other.

Next, the implementation substrate 111 of the LED module 110 is mounted on the bottom 123 of the body 120, then the connectors 113 and 114 are passed through the connector insertion holes 185a and 185b and connector insertion holes 126a and 126b so that the LED module 110 and the lighting unit 150 are electrically connected with each other, and the LED module 110 is housed in the body 120.

FIG. 7 is a sectional view illustrating how the light-emitting unit and the lighting unit are connected. As shown in FIG. 7, in order for the connector 114 of the LED module 110 to be passed through the connector insertion hole 126b of the body 120 and the connector insertion hole 185b of the heat sink 180, an end portion of the circuit substrate 151 of the lighting unit 150 is fitted into the slit 114d of the insulation member 114a of the connector 114 so that the back-side end 114c of the connector 114 engages with the circuit substrate 151. This causes the back-side end 114f of the electrically conductive member 114b positioned inside the slit 114d to be electrically connected with the terminal 152b of the circuit substrate 151. Similarly, the electrically conductive member 113b of the connector 113 is electrically connected with the terminal 152a of the circuit substrate 151.

Next, fixing by screws is performed. The screws 190a through 190c are inserted and screwed in the screw holes 163a through 163c. This allows the LED module 110, body 120, and heat sink 180 to be fixed all at once to the case 160 by the screws, and thus facilitates the assembly. Also, the light source apparatus can be disassembled to the parts only by removing the screws 190a through 190c, when it is disassembled for recycling, for example.

Note that, to the light source apparatus 100, the following assembly structure may be applied. A plurality of types of parts that are different in shape and size but are common in position of the screw insertion holes and connector insertion holes are prepared with respect to each of the parts constituting the light source apparatus 100, and based on the wattage and specifications of the lighting equipment for the target apparatus, parts of the appropriate type are selected from the prepared parts, and combined appropriately.

FIG. 8 is a sectional view illustrating how the front cover is attached to the body. In the subsequent assembly step, the lens 140 is mounted on the LED module 110 in the state where a part of the LED 112 is fitted in the concave 141. Next, the front cover 130 is attached to the opening portion 121 of the body 120 by causing the engaging claws 134a through 134h of the front cover 130 to be in contact with the body 120, and pressing the front cover 130 so that the engaging claws 134a through 134h go around behind the flange 124 of the body 120 and engage with the flange 124. More specifically, in the state where tips of the engaging claws 134a through 134h of the front cover 130 are in contact with the front circumferential edge of the flange 124 of the body 120, the front cover 130 is pressed onto the body 120, so that the engaging claws 134a through 134h bend outside, tips thereof climb over the circumferential edge of the flange 124, and the tips of the engaging claws 134a through 134h, as hooks, engage with the flange 124. The above structure where the front cover 130 is attached by using the engaging claws 134a through 134h is more durable than the structure where the front cover 130 is attached by using screws or adhesive, and contributes to the increase in the life of the light source apparatus 100.

The outer diameter of an outer circumferential part 142 of the lens 140 is larger than the diameter of the light emission window 131. Accordingly, when the front cover 130 is attached to the body 120, the lens 140 is housed inside the light emission window 131, and the outer circumferential part 142 of the lens 140 is covered by an inner circumferential part 137 of the main body 132 of the front cover 130. This structure prevents the lens 140 from dropping off from the light emission window 131. In this state, the lens 140 is sandwiched by the front cover 130 and the LED module 110. This restricts the movement of the lens 140 in the front and back direction, and maintains the state where a part of the LED 112 is fitted in the concave 141. This prevents the lens 140 from being shifted relative to the LED 112 in position.

FIG. 9 is an enlarged cross sectional view of a portion indicated by sign "A" in FIG. 8. As shown in FIG. 9, a front-side outer circumferential portion 127 of the flange 124 of the body 120 has a round shape so that the engaging claws 134a through 134h of the front cover 130 can smoothly go around behind the flange 124. This structure makes it easy for the front cover 130 to be attached to the body 120, and at the same time, makes the engaging claws 134a through 134h difficult to break. Note that the front-side outer circumferential portion 127 of the flange 124 may be formed in a tapered shape. This shape also provides a similar effect.

On the other hand, a back-side outer circumferential portion 128 of the flange 124 is angled sufficiently to make it difficult for the engaging claws 134a through 134h to be disengaged from the flange 124.

Back-side portions 138 of the engaging claws 134a through 134h are formed in a tapered shape so that the engaging claws 134a through 134h of the front cover 130 can smoothly go around behind the flange 124. This structure makes it easy for the front cover 130 to be attached to the body 120, and at the same time, makes the engaging claws 134a through 134h difficult to break. Note that the back-side portions 138 of the engaging claws 134a through 134h may be formed in a round shape. This shape also provides a similar effect.

On the other hand, front-side portions 139 of the engaging claws 134a through 134h are formed to be flat so that, in the state of engaging with the flange 124, the engaging claws 134a through 134h can be easily in close contact with the back-side outer circumferential portion 128 of the flange 124 and are disengaged from the flange 124 with difficulty.

It is preferable that, in the front cover 130, a width W8 of the circumferential wall 133 in the cylindrical axis direction and a width W9 of a projection projecting from the body 120 in the direction perpendicular to the cylindrical axis direction both conform to the JIS C 7527 standard so that the light source apparatus 100 can be attached to the lighting fitting for the halogen bulb.

In this structure, as indicated by arrows in FIG. 9, in the state where the front cover 130 is attached to the body 120, the inside of the body 120 (the inner space defined by the body 120 and the front cover 130) communicates with the outside via the holes 135a through 135h. Therefore, since the air flows between the inside of the body 120 and the outside, it is difficult for the heat generated by the LED module 110 to stay in the body 120.

### [Embodiment 2]

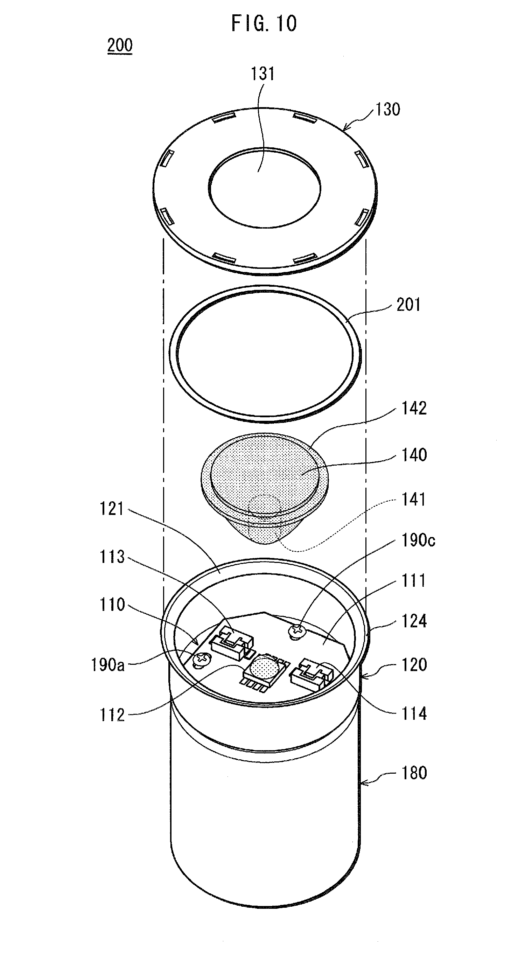

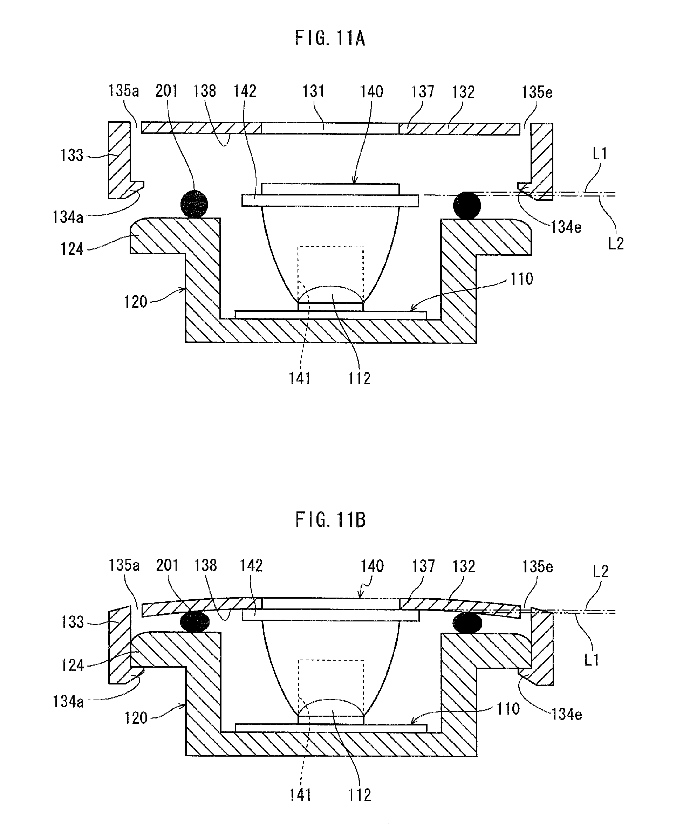

FIG. 10 is an exploded perspective view of the light source apparatus in Embodiment 2. FIGs. 11A and 11B are sectional views illustrating how the front cover is attached to the body. FIG. 11A illustrates the state before the front cover is attached to the body. FIG. 11B illustrates the state after the front cover is attached to the body.

As shown in FIG. 10, a light source apparatus 200 of Embodiment 2 is greatly different from the light source apparatus 100 of Embodiment 1 in that it has a ring 201. In the following, differences are mainly explained, and to avoid redundancy, explanation of similarities to Embodiment 1 is omitted.

The light source apparatus 200 includes the LED module 110, the body 120, the front cover 130, the lens 140, the lighting unit 150 (not illustrated), the case 160 (not illustrated), the base 170 (not illustrated), the heat sink 180, and a ring 201.

Attachment of the front cover 130 is performed as follows. As shown in FIG. 11A, first the LED module 110 is attached to the body 120, and then the lens 140 is mounted on the LED module 110. Subsequently, the front cover 130 is arranged so that the lens 140 is housed in the light emission window 131, and then in the state where the inner circumferential part 137 of the front cover 130 presses the outer circumferential part 142 of the lens 140, the engaging claws 134a through 134h are caused to engage with the flange 124 of the body 120. In this way, the front cover 130 is attached to the body 120.

The ring 201, which is made of rubber or the like, is arranged between the body 120 and the front cover 130. In the state before the ring 201 is attached to the front cover 130, a height level L1 of an upper end of the ring 201 is higher than a height level L2 of an upper surface of the outer circumferential part 142 of the lens 140; and in the state after the ring 201 is attached to the front cover 130, the height level L1 is lower than the height level L2. That is to say, the ring 201 becomes flat when it is pressed by the back face of the front cover 130.

In this way, by arranging the ring 201 between the body 120 and the front cover 130, the lens 140 is fixed to a predetermined position with ease, and the positional shift of the lens 140 is prevented with more certainty.

It is preferable that the thickness of the main body 132 of the front cover 130 is in a range from 0.5 mm to 2.0 mm so that the front cover 130 has elasticity to a suitable extent for the lens 140 to be pressed against the body 120. If the main body 132 is thinner than 0.5 mm, the front cover 130 may not have a sufficient mechanical strength, and if the main body 132 is thicker than 2.0 mm, the front cover 130 may not have a sufficient elasticity.

With this structure where the ring 201 is arranged between the body 120 and the front cover 130, the inside of the body 120 is approximately in a hermetically closed state since it does not communicate with the outside. Accordingly, the LED module 110, which is housed in the body 120, is hermetically sealed. This makes it difficult for the LED module 110 to have a failure by humidity even if the light source apparatus 200 is used in a highly humid environment.

### [Embodiment 3]

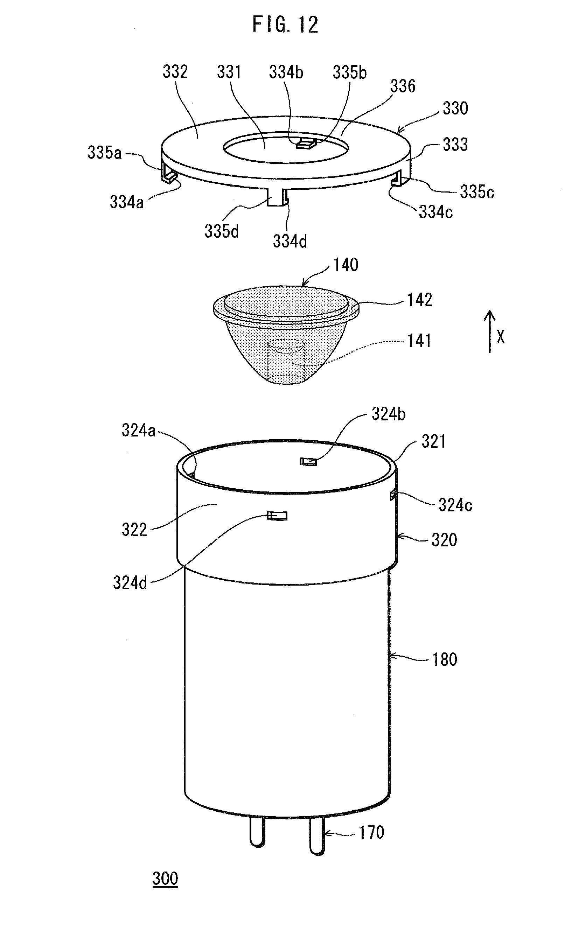

FIG. 12 is an exploded perspective view of the light source apparatus in Embodiment 3. As shown in FIG. 12, a light source apparatus 300 of Embodiment 3 is greatly different from the light source apparatus 100 of Embodiment 1 in the manner in which engaging claws 334a through 334d and claw receiving portions 324a and 324c are provided. In the following, differences are mainly explained, and to avoid redundancy, explanation of similarities to Embodiment 1 is omitted.

The light source apparatus 300 in Embodiment 3 includes the LED module 110 (not illustrated), a body 320, a front cover 330, the lens 140, the lighting unit 150 (not illustrated), the case 160 (not illustrated), the base 170, and the heat sink 180.

The body 320, for example, is formed in the shape of a cylinder with a bottom, from a material that has excellent heat radiation, such as a metal or ceramic (including glass), and has an opening portion 321 at an end on the front side. The body 320 includes a cylindrical portion 322 and a bottom (not illustrated) which is in the shape of a circular plate and closes the lower end of the cylindrical portion 322.

In the vicinity of the front end of the outer circumferential face of the cylindrical portion 322, four engaging holes (claw receiving portions) 324a through 324d are provided at regular intervals along the circumferential direction. The engaging holes 324a through 324d are each approximately rectangular and formed like slits along the circumferential direction of the cylindrical portion 322.

The front cover 330 is made of, for example, white PC, and includes: a main body 332 that is in the shape of a ring-like plate and has an approximately circular light emission window 331 at approximately the center thereof; and a circumferential wall 333 that is in the shape of a short cylinder extending backward from the outer circumferential edge of the main body 332. The back-side end of the circumferential wall 333 has tongues 335a through 335c provided at regular intervals along the circumferential direction of the circumferential wall 333 to extend toward the back side. Also, engaging claws 334a through 334d are provided to project from tips of the tongues 335a through 335c toward the cylindrical axis of the circumferential wall 333.

The front cover 330 is attached to the opening portion 321 of the body 320 by causing the engaging claws 334a through 334d to engage with the engaging holes 324a through 324d (by fitting the engaging claws 334a through 334d into the engaging holes 324a through 324d). Pressing the main body 332 of the front cover 330 onto the opening portion 321 of the body 320 can easily cause the engaging claws 334a through 334d to engage with the engaging holes 324a through 324d.

### [Embodiment 4]

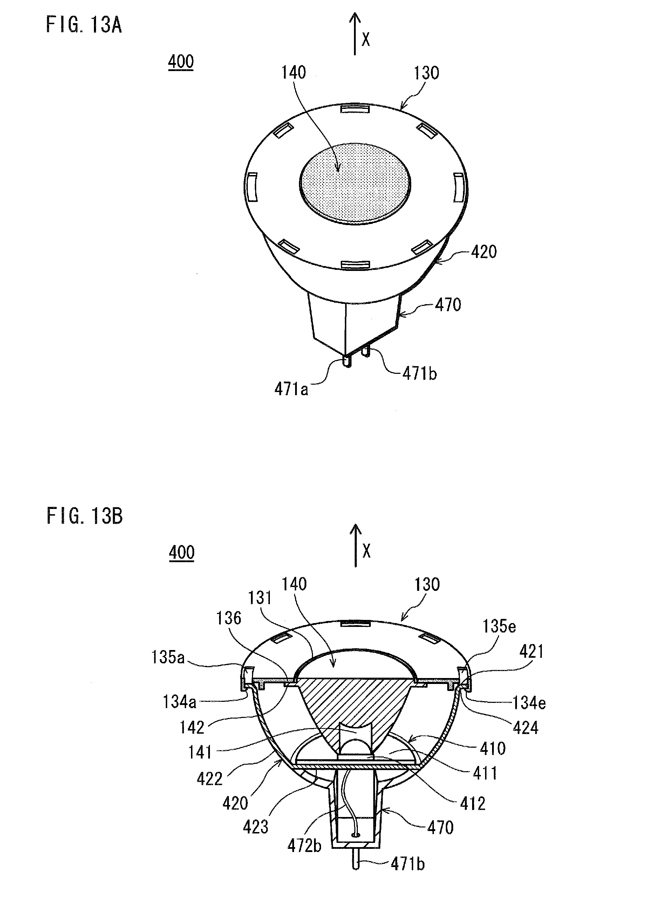

FIGs. 13A and 13B illustrate the light source apparatus in Embodiment 4. FIG. 13A is a perspective view, and FIG. 13B is a sectional view. As shown in FIGs. 13A and 13B, a light source apparatus 400 in Embodiment 4 is a substitute for a halogen bulb, has an outer appearance conforming to the standard for halogen bulb, and includes an LED module 410, a body 420, the front cover 130, the lens 140, a lighting unit (not illustrated), and a base unit 470.

The LED unit 410 is the light source of the light source apparatus 400 and has approximately the same structure as the LED module 110 in Embodiment 1 except, for example, that it includes an implementation substrate 411 and an LED (light-emitting element) 412, and that the implementation substrate 411 has the shape of an approximately circular plate.

The body 420, for example, is made of a material that has excellent heat radiation, such as a metal or ceramic (including glass), has an approximately conical shape, and includes a cylindrical portion 422 and a bottom 423 which is in the shape of a circular plate and closes the lower end of the cylindrical portion 422. The LED module 410 is attached onto the bottom 423.

The front-side end of the cylindrical portion 422 increases in outer and inner diameters as it proceeds toward the front direction, and the part with the increased diameters constitutes the opening portion 421 of the body 420. A flange (claw receiving portion) 424 is provided in the opening portion 421 to extend outwardly from an outer circumferential edge of the opening portion 421, and the front cover 130 is attached by using the flange 424.

The base unit 470 is a base defined in the JIS C 7709 standard that can be adapted to the socket for halogen bulb, and includes a pair of base pins 471a and 471b electrically connected with the lighting unit.

As described above, the light source apparatus 400 is formed to have a similar outer appearance to the halogen bulb, and thus, as a substitute for the halogen bulb, can be attached to more lighting fittings.

### [Modifications]

Up to now, specific examples of the light source apparatus of the present invention have been explained in the embodiments. However, the light source apparatus of the present invention is not limited to these embodiments. For example, the following modifications are considered.

### (Light-emitting module)

The light-emitting element for the light-emitting module is not limited to LED, but may be a semiconductor laser diode or an electroluminescence element. Also, the color of the light emitted by the light-emitting element is not limited to white, but may be any color of light.

### (Body)

The claw receiving portion of the body is not limited to the flanges 124 and 424 of Embodiments 1, 2 and 4 and the engaging holes 324a through 324d of Embodiment 3, but may be in any shape as far as it is provided in the outer surface of the body and can engage with the engaging claws of the front cover.

Also, the body may be made of a light transmissive material. In that case, the light emitted from the LED module passes through the body and leaks from the side of the light source apparatus to outside. This broadens the lighting region of the light source apparatus. Note that the light transmissive material may be light transmissive ceramic such as glass. The above structure is especially effective in the case where the light source apparatus is not used as a spotlight. In this case, it is further preferable that the body is made of a material that has the light diffusion function. Furthermore, it is further preferable that the body is paired with a front cover having functions to transmit and diffuse the light.

### (Front cover)

The material of the front cover is not limited to a non-light-transmissive resin, but may be a light transmissive resin. The front cover made of a light transmissive resin enables the light to be emitted from the whole front face of the light source apparatus. Also, the light that leaks from the lens reflection surface is extracted from the front cover to outside of the body, thus the amount of emitted light increases. Furthermore, the front cover may be made of a resin having functions to transmit and diffuse the light. With this structure, the light emitted from the LED module is diffused at the front cover, providing a light distribution pattern that is close to that of the incandescent lamp. Furthermore, the light emission window of the cover may not be opened, but may be closed by a light transmissive resin or the like.

### (Lens)

The optical member may be a Fresnel lens or a reflection mirror. When a lens is used as the optical member, it is preferable that a reflection layer for reflecting the light is provided on the surface of the lens. If the surface of the lens is provided with the reflection layer so that the lens is surrounded by a mirror facing inward, the amount of emitted light increases.

Note that the optical member is not necessarily required. The light source apparatus may have a structure that is not provided with an optical member. In that case, for example, in Embodiment 1, the main body 132 of the front cover 130 may not be provided with the light emission window 131, and the opening portion 121 of the body 120 may be entirely covered by the main body 132. Furthermore, the optical member 140 and the front cover 130 may be formed as one unit. In other words, a part of the front cover may be formed to function as the optical member.

### (Others)

The light source apparatus of the present invention may be any combination of structural elements of Embodiments 1 through 4.

### [Industrial Applicability]

The light source apparatus of the present invention can be extensively used for lighting in general.

### [Reference Signs List]

- 100, 200, 300, 400: light source apparatus
- 110, 410: light-emitting module
- 120, 320, 420: body
- 121,321,421: opening portion
- 124, 424: flange (claw receiving portion)
- 127: front-side outer circumferential portion
- 130, 330, 430: front cover
- 131, 331, 431: light emission window
- 134a-134f, 324a-324d: engaging claw
- 138: back-side portion of engaging claw
- 140: optical member

## Claims

1. A light source apparatus comprising:
a body having an opening portion on a front side thereof, and housing a light-emitting module; and
a front cover attached to the opening portion of the body and including a light emission window for allowing light emitted from the light-emitting module to go outside,
the front cover having a plurality of engaging claws and being attached to the body when the engaging claws engage with a claw receiving portion that is provided in an outer surface of the body.

2. The light source apparatus of Claim 1, wherein
the claw receiving portion is a flange extending outward from a front-side outer circumferential edge of the body, the engaging claws having gone around behind the flange to engage with the flange.

3. The light source apparatus of Claim 2, wherein
a front side of an outer circumferential edge of the flange is in a round or tapered shape.

4. The light source apparatus of any of Claims 1 to 3, wherein
a back side of each engaging claw is in a round or tapered shape.

5. The light source apparatus of any of Claims 1 to 4, wherein
the engaging claws are provided at intervals along an outer circumferential edge of the front cover.

6. The light source apparatus of any of Claims 1 to 5, wherein
the light emission window is provided with an optical member for collecting light from the light-emitting module.

## Amended claims

### Amended claims under Art. 19.1 PCT

**1.** (Amended) A light source apparatus comprising:
a body having an opening portion on a front side thereof, and housing a light-emitting module; and
a front cover attached to the opening portion of the body and including a light emission window for allowing light emitted from the light-emitting module to go outside,
the front cover having a plurality of engaging claws and being attached to the body when the engaging claws engage with a claw receiving portion that is provided in an outer surface of the body, and
the engaging claws being provided at intervals along an outer circumferential edge of the front cover.

**2.** The light source apparatus of Claim 1, wherein
the claw receiving portion is a flange extending outward from a front-side outer circumferential edge of the body, the engaging claws having gone around behind the flange to engage with the flange.

**3.** The light source apparatus of Claim 2, wherein
a front side of an outer circumferential edge of the flange is in a round or tapered shape.

**4.** The light source apparatus of any of Claims 1 to 3, wherein
a back side of each engaging claw is in a round or tapered shape.

**5.** (Cancelled)

**6.** (Amended) The light source apparatus of any of Claims 1 to 4, wherein
the light emission window is provided with an optical member for collecting light from the light-emitting module.
